# EUROPÄISCHE PATENTSCHRIFT

(11) **EP 3 165 765 B1**
(45) Veröffentlichungstag und Bekanntmachung des Hinweises auf die Patenterteilung: **07.06.2023**
(21) Anmeldenummer: 16197534.7
(22) Anmeldetag: 07.11.2016
(51) Int. Cl.: F03D 7/02

(54) **VERFAHREN UND STEUERUNGSSYSTEM ZUM STEUERN EINES ANSTELLWINKELS EINES ROTORBLATTS SOWIE WINDENERGIEANLAGE UND VERFAHREN ZUM BETREIBEN EINER WINDENERGIEANLAGE**
METHOD AND CONTROL SYSTEM FOR CONTROLLING AN ANGLE OF INCIDENCE OF A ROTOR BLADE AND WIND TURBINE AND METHOD FOR OPERATING A WIND TURBINE
PROCÉDÉ ET SYSTÈME DE COMMANDE D'UN ANGLE D'ATTAQUE D'UNE PALE DE ROTOR ET ÉOLIENNE ET PROCÉDÉ DE FONCTIONNEMENT D'UNE ÉOLIENNE

(30) Priorität: 06.11.2015 DE 102015014296
(43) Veröffentlichungstag der Anmeldung: 10.05.2017
(73) Patentinhaber: Siemens Gamesa Renewable Energy Service GmbH, 20097 Hamburg (DE)
(72) Erfinder: WARFEN, Karsten, 23795 Söhren/Weede (DE); STEINER, Stefan, 24943 Flensburg (DE); LEWEKE, Henning, 24226 Heikendorf (DE); PLEß, Timo, 24782 Büdelsdorf (DE); BILGES, Sören, 22761 Hamburg (DE)
(74) Vertreter: Wallinger Ricker Schlotter Tostmann

(56) Entgegenhaltungen:
- US-A1- 2009 250 932
- US-A1- 2010 140 941
- US-A1- 2013 177 418

## Beschreibung

Die Erfindung betrifft ein Verfahren und ein Steuerungssystem zum Steuern eines Anstellwinkels eines Rotorblatts während eines Abbremsvorgangs eines das Rotorblatt umfassenden Rotors einer Windenergieanlage. Ferner betrifft die Erfindung eine Windenergieanlage mit einem solchen Steuerungssystem sowie ein Verfahren zum Betreiben einer Windenergieanlage, bei dem eine extreme Betriebssituation der Windenergieanlage festgestellt wird.

Das Auftreten eines Fehlers im internen oder externen elektrischen System einer Windenergieanlage einschließlich eines Ausfalls des externen Versorgungsnetzes, der gemeinsam mit einer extremen Einjahresböe auftritt, stellt eine hohe Belastung für die Windenergieanlage dar. Vor allem bei Windenergieanlagen, die für Schwachwindklassen dimensioniert sind, führt dieses Szenario zu hohen Biegebelastungen in der Tragstruktur, beispielsweise dem Turm.

Diese Belastungen sind ggf. für die Dimensionierung der Tragstruktur ausschlaggebend. Dies gilt vor allem für spezifisch weiche Turm-Gondel-Systeme.

Bei Auftreten einer extremen Einjahresböe wird ebenso wie bei Ausfall des externen Versorgungsnetzes der Rotor der Windenergieanlage abgebremst. Dies gilt selbstverständlich auch, wenn beide Ereignisse gleichzeitig auftreten. Das Abbremsen des Rotors erfolgt, indem die Rotorblätter in die sog. "Fahnenstellung" gefahren werden. In dieser Konfiguration wirkt auf die Gondel ein wesentlich geringerer Schub und die Rotation des Rotors wird aerodynamisch abgebremst. Zum Verfahren der Rotorblätter sind vielfach Bremsprogramme vorgesehen, bei dem der Anstellwinkel (Pitch-Winkel) der Rotorblätter mit einer im Wesentlichen konstanten Geschwindigkeit verändert wird.

Aus WO 2009/010059 A2 ist ein Verfahren zum Abbremsen des Rotors einer Windenergieanlage bekannt. Die Rotorblätter werden zunächst mit einer hohen Winkelverstellrate verfahren, bis diese eine Position erreicht haben, in der der Schub auf die Gondel annähernd identisch Null ist. Die elastische Tragstruktur der Windenergieanlage schwingt durch den Wegfall des auf den Rotor wirkenden Schubs entgegen der Windrichtung. Sobald die Windenergieanlage ihre senkrechte Position erreicht, die sie im belastungsfreien Zustand einnimmt, wird der Verstellvorgang der Rotorblätter unterbrochen. Die Tragstruktur schwingt, ohne dass die Rotorblätter verstellt werden, in Richtung eines vorderen Endpunktes, in welchem sie der Windrichtung am weitesten zugewandt ist. Während des sich anschließenden Rückschwingvorgangs in Richtung der senkrechten Position werden die Rotorblätter erneut mit hoher Geschwindigkeit verstellt.

Der EP 1 701 034 A2 ist ein ähnliches Verfahren zum Abbremsen des Rotors einer Windenergieanlage zu entnehmen. Bei diesem Verfahren werden die Anstellwinkel der Rotorblätter während der Schwingungsphase aus der hinteren windabgewandten Endposition in Richtung der senkrechten Position mit höherer Geschwindigkeit verstellt als in der sich anschließenden Schwingungsphase, in der die Tragstruktur aus der senkrechten Position in die vordere dem Wind zugewandte Endposition schwingt. Die Verstellung der Rotorblätter erfolgt mit unterschiedlichen Winkeländerungsgeschwindigkeiten, sie wird während dieses Vorgangs jedoch nicht komplett unterbrochen.

Ferner geht aus EP 2 284 391 A1 ein Verfahren zum Regeln des Anstellwinkels eines Rotorblatts während eines Abbremsvorgangs des Rotors einer Windenergieanlage hervor. Die Verstellgeschwindigkeit des Rotorblatts wird zunächst extrem hoch gewählt und anschließend verringert. Die Verstellgeschwindigkeit des Anstellwinkels des Rotorblatts wird abhängig von äußeren erfassten Größen, beispielsweise der auf die Rotorblätter, den Turm oder das Fundament wirkenden Lasten geregelt, wenn die Verstellgeschwindigkeit des Anstellwinkels von ihrem anfänglich hohen Wert abfällt.

US 2010/140941 A1 offenbart ein Verfahren zum Abbremsen eines Rotors einer Windenergieanlage.

Es ist eine Aufgabe der Erfindung, ein Verfahren und ein Steuerungssystem zum Steuern eines Anstellwinkels eines Rotorblatts während eines Abbremsvorgangs eines das Rotorblatt umfassenden Rotors einer Windenergieanlage sowie eine Windenergieanlage und ein Verfahren zum Betreiben einer Windenergieanlage anzugeben, wobei die auf die Windenergieanlage während des Abbremsvorgangs wirkenden Lasten verringert sein sollen.

Die Aufgabe wird gelöst durch ein Verfahren zum Steuern eines Anstellwinkels eines Rotorblatts während eines Abbremsvorgangs eines das Rotorblatt umfassenden Rotors einer Windenergieanlage, wobei das Verfahren dadurch fortgebildet ist, dass während des Abbremsvorgangs eine zeitabhängige Solldrehzahl als Führungsgröße eines Drehzahlreglers der Windenergieanlage vorgegeben wird, wobei eine Drehzahl des Rotors der Windenergieanlage von dem Drehzahlregler geregelt wird, der zum Regeln der Drehzahl den Anstellwinkel des Rotorblatts verändert, wobei die Solldrehzahl während des Abbremsvorgangs, dessen Ziel eine Verringerung der Rotordrehzahl ist, zumindest bereichsweise ansteigt.

Dem Verfahren gemäß Aspekten der Erfindung liegen unter anderem die folgenden Überlegungen zugrunde. Bei einem Lastabwurf im Zusammenwirken mit einer extremen Einjahresböe wird vielfach ein Abbremsvorgang des Rotors einer Windenergieanlage ausgelöst. In einem solchen Fall ist zunächst eine Zunahme der Rotordrehzahl zu verzeichnen, die außerdem mit einem höheren Turmkopfschub und folglich einer stärkeren Auslenkung des Turmkopfes bzw. der Gondel in Windrichtung einhergeht. Im Verlauf des Abbremsvorgangs des Rotors erreicht die Turmkopfauslenkung ihr Maximum. Im Anschluss erfolgt aufgrund der elastischen Eigenschaften der Tragstruktur eine Bewegung des Turmkopfes entgegengesetzt der Windrichtung. Am Endpunkt dieses Rückschwingvorgangs werden vielfach Turmfußbiegemomente erreicht, die für die Dimensionierung der Tragstruktur entscheidend sind.

Diese hohen Biegemomente am Fuß der Tragstruktur können durch eine Reduktion der Verstellraten (Pitchraten) der Anstellwinkel (Pitchwinkel) der Rotorblätter während der Rückschwingphase beeinflusst werden. Gleichzeitig sind hohe Verstellraten der Blattanstellwinkel zu Beginn des Abbremsvorgangs zu bevorzugen, um im weiteren Verlauf des Abbremsvorgangs auftretende hohe Generatordrehzahlen zu begrenzen.

Das Verfahren zum Steuern eines Anstellwinkels eines Rotorblatts ist so ausgestaltet, dass in Abhängigkeit von der Dynamik des spezifischen Turm-Gondel-Systems die Sollwerte der Pitchrate und ihr zeitlicher Verlauf derart gestaffelt sind, dass die Turmfußbiegebelastungen gesenkt und die Generatordrehzahlen in ausreichendem Maß begrenzt werden. Hierzu wird von einer starren Vorgabe der Stellgröße wie beispielsweise dem Pitchwinkel oder der Pitchrate abgesehen. Im Gegenteil, der Drehzahlregler der Windenergieanlage bleibt zumindest zeitweise aktiv und die zum Abbremsen des Rotors der Windenergieanlage notwendigen Pitchraten werden mittelbar durch entsprechende Drehzahlsollwerte, welche dem Drehzahlregler zugeführt werden, beeinflusst. So wird die Möglichkeit geschaffen, dass sich das Verhalten der Windenergieanlage den aktuellen Windbedingungen, welche eine unbekannte Störgröße während des Abbremsvorgangs darstellen, dynamisch anpasst.

Insbesondere ist vorgesehen, dass das Verfahren so ausgestaltet ist, dass die Anstellwinkel aller Rotorblätter während eines Abbremsvorgangs des die Rotorblätter umfassenden Rotors entsprechend der oben genannten Merkmale verändert werden.

Erfindungsgemäß umfasst das Verfahren, dass die dem Drehzahlregler als Führungsgröße bereitgestellte Solldrehzahl zumindest bereichsweise ansteigt. Mit anderen Worten steigt der Wert für die Solldrehzahl während zumindest eines Zeitintervalls an, welches kürzer als der gesamte Abbremsvorgang ist. Gemäß einem bevorzugten Ausführungsbeispiel ist vorgesehen, dass die dem Drehzahlregler als Führungsgröße bereitgestellte Solldrehzahl während eines Abschnitts des Abbremsvorgangs konstant ist.

Mit anderen Worten wird zunächst gezielt eine Zunahme der Rotordrehzahl in Kauf genommen, obwohl das Ziel des Abbremsvorgangs selbstverständlich eine Verringerung der Rotordrehzahl, insbesondere bis zum zumindest näherungsweisen Stillstand des Rotors der Windenergieanlage, ist. Während einer Phase oder eines Zeitabschnitts, in der die Solldrehzahl konstant gehalten wird, erfolgt mittelbar über den Drehzahlregler die Verstellung des Anstellwinkels der Rotorblätter mit hoher Pitchrate. Der Drehzahlregler versucht nämlich bei zunehmender Windstärke die Rotordrehzahl konstant zu halten, was ihm nur durch eine schnelle Vergrößerung des Anstellwinkels der Rotorblätter gelingt. Anschließend ist insbesondere eine Phase vorgesehen, während der die Solldrehzahl des Rotors ansteigt. Dies führt dazu, dass der Drehzahlregler eine überwiegend geringe Pitchrate vorgibt. Es ist ferner insbesondere vorgesehen, dass eine maximale Solldrehzahl vorgesehen ist. Entsprechend wird dem Drehzahlregler eine Solldrehzahl vorgegeben, welche den vorgegebenen Maximalwert nicht überschreitet. Die Drehzahl des Rotors steigt also lediglich bis zu diesem Maximalwert an. Sollte die aktuelle Drehzahl des Rotors diesen übersteigen, so greift der Drehzahlregler erneut ein und erhöht beispielsweise die Pitchrate.

Technische Merkmale und die Funktionsweise eines Drehzahlreglers einer Windenergieanlage sind beispielsweise aus Erich Hau, Windkraftanlagen, 4. Auflage, 2008, Kapitel 10, vor allem auch Kapitel 10.5, bekannt.

Vorteilhaft ist das Verfahren dadurch fortgebildet, dass nach Einhalten einer vorgebbaren Totzeit die Solldrehzahl während des Abbremsvorgangs zumindest bereichsweise ansteigt. Die zeitliche Dauer der vorgebbaren Totzeit ist insbesondere eine Funktion einer Eigenfrequenz einer Tragstruktur und/oder einer Eigenfrequenz eines Triebstrangs der Windenergieanlage.

Unter dem Triebstrang der Windkraftanlage werden insbesondere die leistungsübertragenden drehenden Komponenten vom Rotor bis zum Generator verstanden.

Beispielsweise findet der Abbremsvorgang in einem Zeitintervall statt, welches ein erstes Zeitintervall und ein späteres zweites Zeitintervall umfasst. Während des ersten Zeitintervalls zwischen einem ersten Zeitpunkt, zu dem der Abbremsvorgang beginnt, und einem späteren zweiten Zeitpunkt wird die Totzeit eingehalten. In diesem ersten Zeitintervall findet beispielsweise keine Regelung der Solldrehzahl statt. In dem späteren zweiten Zeitintervall zwischen dem zweiten Zeitpunkt und einem späteren dritten Zeitpunkt steigt die Solldrehzahl zumindest bereichsweise an. Beispielsweise wird die Solldrehzahl durch eine zweite Solldrehzahlrampe oder auch eine andere beliebig zwischen dem zweiten und dritten Zeitpunkt ansteigende Funktion vorgegeben.

In dem ersten Zeitintervall wird das Rotorblatt in vielen Fällen ohnehin mit maximal zulässiger Geschwindigkeit in Richtung der Fahnenstellung verfahren. Selbst wenn also in diesem Zeitintervall eine Drehzahlregelung stattfindet, ist die resultierende Vorgabe durch den Drehzahlregler in einem solchen Szenario unbeachtlich.

Ferner ist das Verfahren insbesondere dadurch fortgebildet, dass der Abbremsvorgang in einem Zeitintervall stattfindet, welches ein erstes Zeitintervall und ein zweites Zeitintervall umfasst, wobei im ersten Zeitintervall zwischen einem ersten Zeitpunkt, zu dem der Abbremsvorgang beginnt, und einem zweiten Zeitpunkt die Solldrehzahl durch eine erste Solldrehzahlrampe vorgegeben wird, und in einem zweiten Zeitintervall zwischen dem zweiten Zeitpunkt und einem dritten Zeitpunkt die Solldrehzahl durch eine zweite Solldrehzahlrampe vorgegeben wird, und wobei die erste Solldrehzahlrampe und die zweite Solldrehzahlrampe unterschiedliche Steigungen aufweisen.

Der erste, zweite und dritte Zeitpunkt sind zeitlich aufeinanderfolgende Zeitpunkte. Bei einer "Solldrehzahlrampe" handelt es sich im Kontext der vorliegenden Beschreibung um den zeitlichen Verlauf des Werts der Solldrehzahl über der Zeit.

Die Vorgabe der Sollwerte für die Drehzahl des Rotors an dem Drehzahlregler in Form von Rampen ist regelungstechnisch gut beherrschbar und erlaubt eine präzise und einfache Parametrisierung des Abbremsvorgangs.

Gemäß einer weiteren Ausführungsform ist das Verfahren dadurch fortgebildet, dass eine zeitliche Dauer der Totzeit und/oder des ersten Zeitintervalls eine Funktion einer Eigenfrequenz einer Tragstruktur und/oder einer Eigenfrequenz eines Triebstrangs der Windenergieanlage ist. Die zeitliche Dauer der Totzeit oder des ersten Zeitintervalls ist insbesondere eine Funktion der Turmeigenfrequenz der Windenergieanlage. Beispielsweise ist vorgesehen, dass die Totzeit oder das erste Zeitintervall eine Dauer haben, die kleiner ist als ein Viertel der Dauer einer kompletten Schwingung der Tragstruktur bei ihrer Eigenfrequenz.

Bevor ein Abbremsvorgang des Rotors eingeleitet wird, wirkt in der Regel ein hoher Schub auf den Rotor. Die Tragstruktur der Windenergieanlage ist also in der Regel stark vorgespannt. Wird der Abbremsvorgang eingeleitet, fällt der auf den Rotor wirkende Schub schnell ab, da die Rotorblätter aus dem Wind gedreht werden. Die Folge ist, dass der Kopf der Windenergieanlage nach vorn, also in Windrichtung, schwingt. Befindet sich die Gondel der Windenergieanlage in einem vorderen Umkehrpunkt, so ist in etwa eine halbe Schwingungsperiode verstrichen. Die zeitliche Dauer der Totzeit oder die zeitliche Dauer des ersten Intervalls entspricht insbesondere zumindest näherungsweise einem Viertel der Schwingungsperiode. Nachdem die Totzeit verstrichen ist, übernimmt der Drehzahlregler wieder die Steuerung der Pitchrate. Die Rotorblätter werden ab diesem Moment mit geringerer Geschwindigkeit aus dem Wind gefahren, so dass sie im zweiten Viertel der Schwingungsperiode die Vorwärtsbewegung der Gondel der Windenergieanlage abbremsen. Die Pitchgeschwindigkeit wird, sofern die Rotordrehzahl nicht den maximal zulässigen Wert überschreitet, geringer ausfallen als während der vorausgegangenen Totzeit, so dass eine ausgeprägte Gegenschwingung (in Windrichtung) verhindert wird.

Die zeitliche Dauer der Totzeit und/oder des ersten Zeitintervalls ist insbesondere kleiner oder kleiner gleich einem Viertel der Periodenlänge der Schwingung der Tragstruktur bei Ihrer Eigenfrequenz.

Eine solche Dauer der Totzeit und/oder des ersten Zeitintervalls hat sich vor allem für Windenergieanlagen mit einem Getriebe als besonders vorteilhaft erwiesen. Ferner ist es zur Vermeidung von Schwingungen im Triebstrang der Windenergieanlage von Vorteil, wenn die zeitliche Dauer der Totzeit und/oder des ersten Zeitintervalls in Abhängigkeit von der Triebstrangeigenfrequenz so gewählt wird, dass ein Aufschwingen des Triebstrangs vermieden wird. Die zeitliche Dauer einer derartig gewählten Dauer der Totzeit und/oder des ersten Zeitintervalls kann beispielsweise ein zwanzigstel der der Periodenlänge der Schwingung der Tragstruktur bei Ihrer Eigenfrequenz betragen.

Insbesondere ist vorgesehen, dass eine zweite Steigung der zweiten Solldrehzahlrampe größer Null ist. Ferner ist insbesondere vorgesehen, dass eine erste Steigung der ersten Solldrehzahlrampe größer gleich Null ist.

Eine Steigung größer Null bedeutet im Kontext der vorliegenden Beschreibung eine positive Steigung. Der Wert der Solldrehzahl steigt also mit der Zeit an. Ferner ist insbesondere vorgesehen, dass ein Maximalwert und/oder ein Minimalwert für die Steigung der ersten oder insbesondere der zweiten Solldrehzahlrampe vorgegeben sind.

Ein entsprechender Maximalwert bzw. Minimalwert grenzt die während des Abbremsvorgangs auf die Windenergieanlage wirkenden Lasten, die durch den Abbremsvorgang selbst bedingt sind.

Der Abbremsvorgang beginnt mit einer Haltezeit, also einer Rampe mit Steigung Null, in der die Drehzahlregelung versucht, die aktuelle Rotordrehzahl weitestgehend konstant zu halten. In dieser Phase werden hohe Pitchraten erreicht. Es ist ebenso vorgesehen, in diesem ersten Zeitintervall eine geringfügig ansteigende Rampe zuzulassen, um zu hohe Pitchraten zu vermeiden, welche ihrerseits wiederum eine nicht zu vernachlässigende Belastung für die Windenergieanlage darstellen können. Im zweiten Zeitintervall wird der Drehzahlsollwert entsprechend der zweiten Solldrehzahlrampe verändert. Er liegt am Ende der zweiten Rampe insbesondere über der Nenndrehzahl der Windenergieanlage.

Mit anderen Worten ist also insbesondere vorgesehen, dass während des Abbremsvorgangs eine zeitabhängige Solldrehzahl als Führungsgröße eines Drehzahlreglers der Windenergieanlage vorgegeben wird, welche einen monoton steigenden Verlauf hat und deren Endwert ferner insbesondere oberhalb der Nenndrehzahl der Windenergieanlage liegt.

Gemäß einer weiteren Ausführungsform ist vorgesehen, dass sowohl die erste Solldrehzahlrampe als auch die zweite Solldrehzahlrampe lineare Rampen sind. So steigt also beispielsweise während des zweiten Zeitintervalls die Solldrehzahl des Rotors linear über der Zeit an. In dieser Phase werden im Allgemeinen geringere Pitchraten gefordert als während des ersten Zeitintervalls. Ferner ist insbesondere vorgesehen, dass die Steigung der Solldrehzahlrampe im zweiten Zeitintervall stets größer ist als im ersten Zeitintervall. So ist sichergestellt, dass zu Beginn des Abbremsvorgangs hohe Pitchraten erreicht werden, insbesondere höhere als im ersten Zeitintervall.

Im Kontext der oben beschriebenen Aspekte der Erfindung ist wichtig, dass der Drehzahlregler zu jedem Zeitpunkt des Abbremsvorgangs aktiv ist und die Pitchwinkel und Pitchraten an das Blattverstellsystem (Pitchsystem) übergibt. Es kann jedoch vorgesehen sein, dass bis zum Ablauf der Totzeit die durch den Drehzahlregler angeforderten Pitchraten durch eine Pitchratenbegrenzung übersteuert werden. Nach Ablauf der Totzeit erfolgt hingegen eine indirekte Regelung oder Steuerung der Pitchrate über den Drehzahlregler, indem diesem Vorgaben bzgl. der Solldrehzahl übergeben werden. Somit wird die Windenergieanlage vorteilhaft in die Lage versetzt, dynamisch auf äußere Einflüsse reagieren zu können.

Das Verfahren zum Steuern eines Anstellwinkels eines Rotorblatts ist gemäß weiteren Aspekten der Erfindung insbesondere dadurch fortgebildet, dass von dem Drehzahlregler an ein Blattwinkelverstellsystem des Rotorblatts ausgegebene Sollwerte für eine Verstellrate des Anstellwinkels durch einen oberen Grenzwert und/oder einen unteren Grenzwert begrenzt sind.

Die Aufgabe wird ferner gelöst durch ein Verfahren zum Betreiben einer Windenergieanlage, bei dem eine extreme Betriebssituation der Windenergieanlage festgestellt wird, wobei das Verfahren dadurch fortgebildet ist, dass bei Auftreten der extremen Betriebssituation ein Abbremsvorgang eines Rotors der Windenergieanlage eingeleitet wird und der Rotor mit einem Verfahren gemäß einem oder mehreren der zuvor genannten Aspekte abgebremst wird.

Das Verfahren ist insbesondere dadurch fortgebildet, dass als extreme Betriebssituation das Auftreten einer Einjahresböe, insbesondere in Verbindung mit einem gleichzeitigen Netzausfall, festgestellt wird.

Auf das Verfahren zum Betreiben einer Windenergieanlage treffen gleiche oder ähnliche Vorteile und Aspekte zu wie sie bereits im Hinblick auf das Verfahren zum Steuern eines Anstellwinkels eines Rotorblatts während eines Abbremsvorgangs erwähnt wurden, so dass auf Wiederholungen verzichtet werden soll.

Die Aufgabe wird ferner gelöst durch ein Steuerungssystem zum Steuern eines Anstellwinkels eines Rotorblatts während eines Abbremsvorgangs eines das Rotorblatt umfassenden Rotors einer Windenergieanlage, wobei das Steuerungssystem dadurch fortgebildet ist, dass dieses Steuerungssystem dazu eingerichtet ist, während des Abbremsvorgangs eine zeitabhängige Solldrehzahl als Führungsgröße eines Drehzahlreglers der Windenergieanlage vorzugeben, wobei der Drehzahlregler dazu eingerichtet ist, eine Drehzahl des Rotors der Windenergieanlage zu regeln und zum Regeln der Drehzahl den Anstellwinkel des Rotorblatts zu verändern, wobei das Steuerungssystem dazu eingerichtet ist, während des Abbremsvorgangs, dessen Ziel eine Verringerung der Rotordrehzahl ist, eine zeitabhängige Solldrehzahl als Führungsgröße vorzugeben, welche zumindest bereichsweise ansteigt.

Auch auf das Steuerungssystem treffen gleiche oder ähnliche Vorteile und Aspekte zu, wie sie bereits zuvor im Hinblick auf das Verfahren zum Steuern eines Anstellwinkels eines Rotorblatts erwähnt wurden, so dass auf Wiederholungen verzichten werden soll.

Es ist ferner insbesondere vorgesehen, dass das Steuerungssystem dazu eingerichtet ist, während des Abbremsvorgangs eine konstante zeitabhängige Solldrehzahl als Führungsgröße vorzugeben.

Gemäß einer weiteren vorteilhaften Ausführungsform ist das Steuerungssystem dadurch fortgebildet, dass das Steuerungssystem ferner dazu eingerichtet ist, während des Abbremsvorgangs zunächst eine vorgebbare Totzeit einzuhalten und anschließend eine zeitabhängige Solldrehzahl vorzugeben, welche zumindest bereichsweise ansteigt.

Beispielsweise ist das Steuerungssystem dazu eingerichtet, dass der Abbremsvorgang in einem Zeitintervall stattfindet, welches ein erstes Zeitintervall und ein späteres zweites Zeitintervall umfasst, wobei das Steuerungssystem ferner dazu eingerichtet ist, im ersten Zeitintervall zwischen einem ersten Zeitpunkt, zu dem der Abbremsvorgang beginnt, und einem späteren zweiten Zeitpunkt die Totzeit einzuhalten. In dieser Totzeit kann es vorgesehen sein, dass keine Regelung der Solldrehzahl stattfindet. In dem zweiten Zeitintervall zwischen dem zweiten Zeitpunkt und einem späteren dritten Zeitpunkt wird die Solldrehzahl erneut durch das Steuerungssystem vorgegeben. Beispielsweise gibt dieses eine zweite Solldrehzahlrampe vor. Es kann aber auch eine andere beliebige andere Funktion vorgeben, welche zwischen dem zweiten und dem dritten Zeitpunkt zumindest bereichsweise ansteigt.

Insbesondere ist das Steuerungssystem auch dadurch fortgebildet, dass der Abbremsvorgang in einem Zeitintervall stattfindet, welches ein erstes Zeitintervall und ein zweites Zeitintervall umfasst, wobei das Steuerungssystem dazu eingerichtet ist, im ersten Zeitintervall zwischen einem ersten Zeitpunkt, zu dem der Abbremsvorgang beginnt, und einem zweiten Zeitpunkt die Solldrehzahl durch eine erste Solldrehzahlrampe vorzugeben, und in einem zweiten Zeitintervall zwischen dem zweiten Zeitpunkt und einem dritten Zeitpunkt die Solldrehzahl durch eine zweite Solldrehzahlrampe vorzugeben, und wobei die erste Solldrehzahlrampe und die zweite Solldrehzahlrampe unterschiedliche Steigungen aufweisen.

Ferner ist insbesondere vorgesehen, dass das Steuerungssystem dadurch fortgebildet ist, dass in dem Steuerungssystem ein Wert für eine Eigenfrequenz einer Tragstruktur der Windenergieanlage vorhanden ist und das Steuerungssystem dazu eingerichtet ist, eine zeitliche Dauer der Totzeit und/oder des ersten Zeitintervalls als eine Funktion der Eigenfrequenz der Tragstruktur und / oder eines Triebstrangs der Windenergieanlage vorzugeben. Das Steuerungssystem weist beispielsweise Sensoren zur Erfassung der Eigenfrequenz der Tragstruktur, beispielsweise der Turmeigenfrequenz, und/oder Sensoren zur Erfassung der Triebstrangeigenfrequenz auf. Ein Wert der Eigenfrequenz kann ebenso in einem nichtflüchtigen Speicher des Steuerungssystems hinterlegt sein. Er wird beispielsweise anhand der Konstruktionsdaten der Tragstruktur einmalig berechnet und/oder bei der Inbetriebnahme der Windenergieanlage ermittelt und hinterlegt.

Gemäß einer weiteren vorteilhaften Ausführungsform ist ferner vorgesehen, dass das Steuerungssystem dazu eingerichtet ist, die zweite Solldrehzahlrampe mit einer zweiten Steigung von größer Null vorzugeben.

Insbesondere ist das Steuerungssystem auch dadurch fortgebildet, dass das Steuerungssystem dazu eingerichtet ist, die erste Solldrehzahlrampe mit einer ersten Steigung von größer gleich Null vorzugeben.

Gemäß einer Ausführungsform ist ferner vorgesehen, dass das Steuerungssystem dazu eingerichtet ist, eine erste Steigung der ersten Solldrehzahlrampe und eine zweite Steigung der zweiten Solldrehzahlrampe vorzugeben, wobei die erste Steigung größer ist als die zweite Steigung.

Das Steuerungssystem ist vorteilhaft dadurch fortgebildet, dass das Steuerungssystem dazu eingerichtet ist, von dem Drehzahlregler an ein Blattwinkelverstellsystem des Rotorblatts ausgegebene Sollwerte für eine Verstellrate des Anstellwinkels durch einen oberen Grenzwert und/oder einen unteren Grenzwert zu begrenzen.

Die Aufgabe wird ferner gelöst durch eine Windenergieanlage, die dadurch fortgebildet ist, dass sie ein Steuerungssystem nach einem oder mehreren der zuvor genannten Aspekte umfasst, wobei das Steuerungssystem ferner dazu eingerichtet ist, eine extreme Betriebssituation der Windenergieanlage festzustellen und bei Auftreten der extremen Betriebssituation ein Abbremsvorgang des Rotors der Windenergieanlage einzuleiten.

Auch auf die Windenergieanlage treffen gleiche oder ähnliche Vorteile und Aspekte zu, wie bereits im Hinblick auf das Verfahren zum Steuern eines Anstellwinkels eines Rotorblatts erwähnt wurden.

Die Windenergieanlage ist ferner dadurch fortgebildet, dass das Steuerungssystem dazu eingerichtet ist, als extreme Betriebssituation das Auftreten einer Einjahresböe, insbesondere in Verbindung mit einem gleichzeitigen Netzausfall, festzustellen.

Auch im Hinblick auf die Fortbildung des Verfahrens zum Betreiben einer Windenergieanlage, des Steuerungssystems zum Steuern eines Anstellwinkels eines Rotorblatts während eines Abbremsvorgangs eines das Rotorblatt umfassenden Rotors einer Windenergieanlage sowie die Windenergieanlage selbst treffen bevorzugt die im Hinblick auf das Verfahren zum Steuern eines Anstellwinkels eines Rotorblatts genannten Aspekte zu.

Weitere Merkmale der Erfindung werden aus der Beschreibung erfindungsgemäßer Ausführungsformen zusammen mit den Ansprüchen und den beigefügten Zeichnungen ersichtlich.

Die Erfindung wird nachstehend ohne Beschränkung der vorliegenden Erfindung anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:

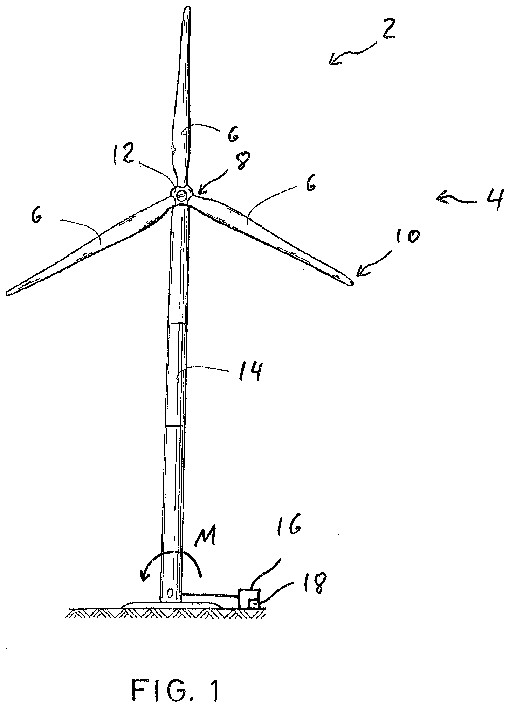

- Fig. 1: eine Windenergieanlage in schematisch vereinfachter Darstellung,

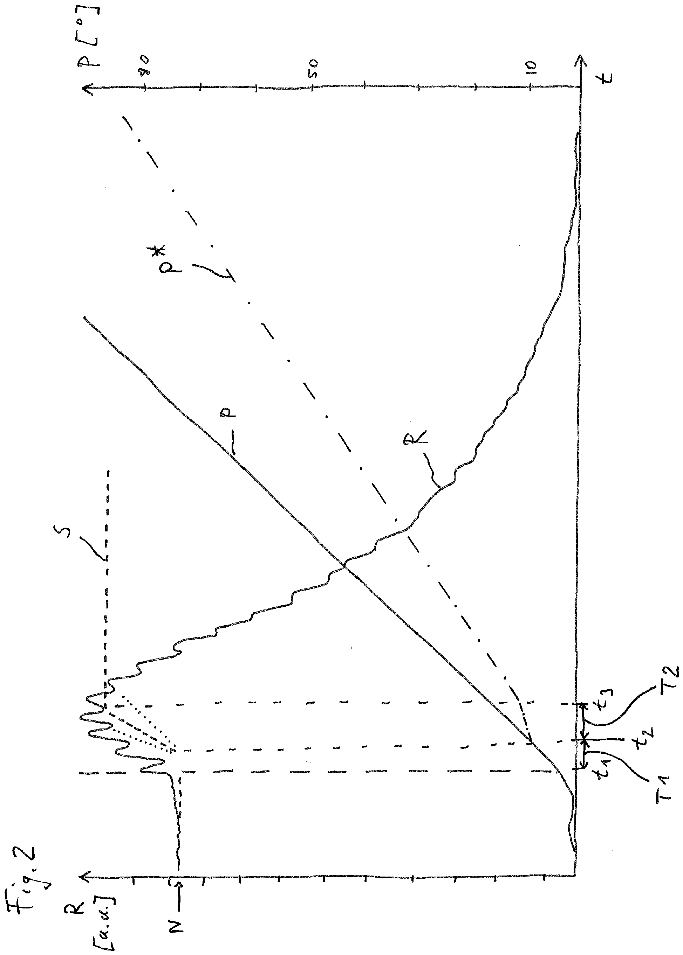

- Fig. 2: einen beispielhaften schematisch dargestellten zeitlichen Verlauf einer Rotordrehzahl sowie eines Rotorblattanstellwinkels während eines Abbremsvorgangs des Rotors einer Windenergieanlage, ebenfalls gezeigt sind ein Sollwert für die Rotordrehzahl (gestrichelte Linie) und ein Rotorblattanstellwinkel (strichpunktierte Linie) entsprechend einem Verfahren gemäß Aspekten der Erfindung und

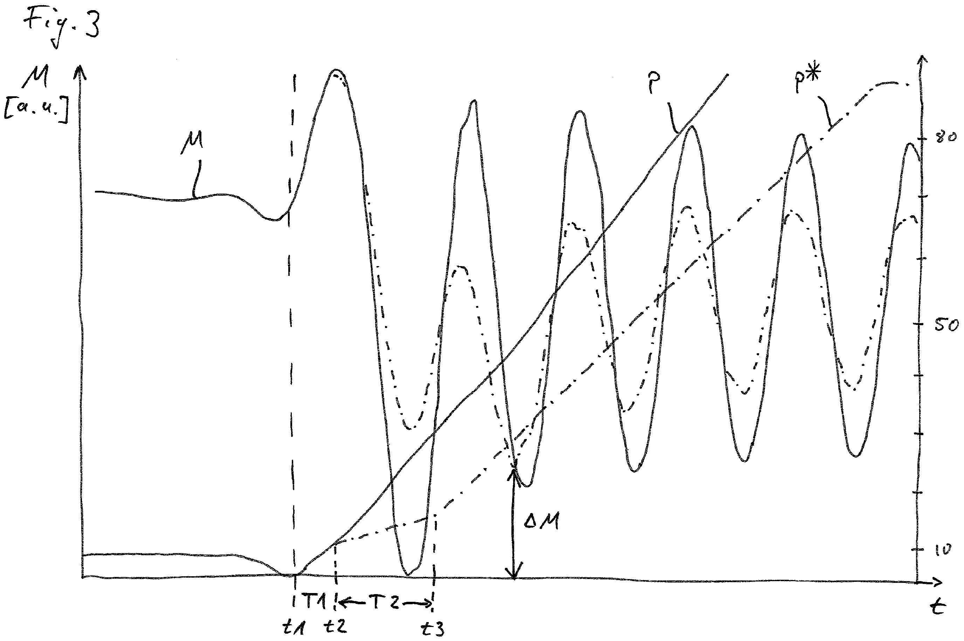

- Fig. 3: den schematisch vereinfacht dargestellten zeitlichen Verlauf eines Turmfußbiegemoments der Tragstruktur einer Windenergieanlage in einer Vergleichsdarstellung zwischen einem herkömmlichen Verfahren zum Abbremsen des Rotors der Windenergieanlage (durchgezogene Linie) und einem entsprechenden Verfahren gemäß Aspekten der Erfindung (strichpunktierte Linie), wobei ebenfalls der zeitliche Verlauf eines Rotorblattanstellwinkels gemäß einem herkömmlichen Verfahren (durchgezogene Linie) und entsprechend einem Verfahren gemäß Aspekten der Erfindung (strichpunktierte Linie) dargestellt sind.

In den Zeichnungen sind jeweils gleiche oder gleichartige Elemente und/oder Teile mit denselben Bezugsziffern versehen, so dass von einer erneuten Vorstellung jeweils abgesehen wird.

Fig. 1 zeigt eine Windenergieanlage 2 in schematisch vereinfachter Darstellung. Ihr Rotor 4 umfasst beispielhaft drei Rotorblätter 6, die sich jeweils zwischen einer Rotorblattwurzel 8 und einer Rotorblattspitze 10 erstrecken. Die Rotorblätter 6 sind an ihrer Rotorblattwurzel 8 an einer Rotornabe 12 befestigt. Diese treibt einen Hauptantriebsstrang der Windenergieanlage 2 an, welcher innerhalb einer in Fig. 1 nicht sichtbaren Gondel verläuft. Die Gondel wird von einer Tragstruktur 14, beispielsweise einem Turm, getragen.

Die Windenergieanlage 2 umfasst ferner ein schematisch und vereinfacht dargestelltes Steuerungssystem 16. Lediglich beispielhaft und schematisch ist dieses als externe Steuerung dargestellt. Es ist ebenso vorgesehen, dass das Steuerungssystem 16 in die Windenergieanlage 2, beispielsweise in deren Tragstruktur 14 oder in deren Gondel, vorhanden ist. Das Steuerungssystem 16 dient unter anderem zum Steuern und/oder Regeln eines Anstellwinkels zumindest eines der Rotorblätter 6 des Rotors 4, insbesondere zum Steuern und/oder Regeln der Anstellwinkel aller Rotorblätter 6 des Rotors 4.

Über die Verstellung des Rotorblattanstellwinkels (Pitchwinkel) wird die Drehzahl des Rotors 4 gesteuert bzw. geregelt. Hierzu ist von dem Steuerungssystem 16 insbesondere ein Drehzahlregler 18 umfasst.

Technische Merkmale und die Funktionsweise eines Drehzahlreglers sowie Details zur Verstellung des Rotorblattanstellwinkels mithilfe eines ebenfalls nicht dargestellten Blattwinkelverstellsystems (Pitchsystem) sind beispielsweise aus Erich Hau, Windkraftanlagen, 4. Auflage, 2008, Kapitel 10, bekannt.

In einer extremen Betriebssituation der Windenergieanlage 2 wird deren Rotor 4 abgebremst. Hierzu werden die Rotorblätter 6 in die sog. Fahnenstellung verfahren. In dieser Stellung der Rotorblätter 6 zeigen die Rotorblattvorderkanten entgegen der Windrichtung, der Rotorblattanstellwinkel ist also sehr groß, beispielsweise näherungsweise 90°. Der auf den Rotor 4 wirkende Schub wird wesentlich verringert, außerdem sorgen die quer zur Rotationsrichtung orientierten Rotorblätter 6 für einen hohen aerodynamischen Luftwiderstand in Rotationsrichtung, so dass der rotierende Rotor 4 gebremst wird. Eine extreme Betriebssituation liegt beispielsweise vor, wenn eine extreme Einjahresböe und ein Netzausfall gleichzeitig auftreten. Das Steuerungssystem 16 der Windenergieanlage 2 ist dazu eingerichtet, eine solche extreme Betriebssituation der Windenergieanlage 2 festzustellen. Ferner ist das Steuerungssystem 16 dazu eingerichtet, in einem solchen Fall den Abbremsvorgang des Rotors 4 der Windenergieanlage 2 einzuleiten.

Während des Abbremsvorgangs wird eine zeitabhängige Solldrehzahl dem Drehzahlregler 18 der Windenergieanlage 2 als Führungsgröße vorgegeben. Der Drehzahlregler 18 ist dazu eingerichtet, ausgehend von diesem Sollwert eine Drehzahl des Rotors 4 der Windenergieanlage 2 zu regeln und hierzu den Anstellwinkel der Rotorblätter 6 zu verändern. Mit anderen Worten wird also der Pitchwinkel indirekt gesteuert oder geregelt, indem dem Drehzahlregler entsprechende Solldrehzahlen vorgegeben werden. Vorteilhaft bleibt während des Abbremsvorgangs der Drehzahlregler aktiv, so dass die Windenergieanlage 2 dynamisch auf sich verändernde Windbedingungen reagieren kann. Es kann jedoch vorgesehen sein, dass der Drehzahlregler zwar aktiv ist, jedoch während der Totzeit übersteuert wird.

Fig. 2 zeigt beispielhaft und schematisch den zeitlichen Verlauf einer Rotordrehzahl R, aufgetragen über der Zeit t, während eines Abbremsvorgangs. Ferner ist ein Rotorblattanstellwinkel P über der gleichen Zeitskala aufgetragen. Der beispielhafte gezeigte zeitliche Verlauf der Rotordrehzahl R und des Rotorblattanstellwinkels P betrifft einen herkömmlichen Abbremsvorgang des Rotors 4 einer Windenergieanlage 2. Ebenfalls gezeigt sind ein Sollwert S für die Rotordrehzahl, in gestrichelter Linie, und ein Rotorblattanstellwinkel P* in strichpunktierter Linie entsprechend einem Verfahren gemäß Aspekten der Erfindung.

Zu einem ersten Zeitpunkt t1 soll das auslösende Ereignis, beispielsweise das Auftreten einer Einjahresböe gemeinsam mit einem Verlust des Versorgungsnetzes, beispielhaft stattfinden. Bei einem konventionellen System wird der Rotorblattanstellwinkel P ausgehend von einem Wert, wie er im Betrieb der Windenergieanlage 2 vorliegt und der beispielhaft nahe 0° liegt, mit konstanter Blattwinkelverstellgeschwindigkeit (Pitchgeschwindigkeit) bis zu einem Pitchwinkel von näherungsweise 90° verfahren. Die Rotordrehzahl R steigt nach Eintritt der extremen Betriebssituation zum Zeitpunkt t1 zunächst an, um dann im Laufe des Abbremsvorgangs abzufallen.

Ferner ist in Fig. 2 dargestellt, wie eine Solldrehzahl S als Führungsgröße des Drehzahlreglers 18 während des Abbremsvorgangs verändert wird. Der Abbremsvorgang findet in einem Zeitintervall statt, welches ein erstes Zeitintervall T1, zwischen dem ersten Zeitpunkt t1 und dem späteren zweiten Zeitpunkt t2, und ein späteres zweites Zeitintervall T2, zwischen dem zweiten Zeitpunkt t2 und einem späteren dritten Zeitpunkt t3, umfasst.

Die Solldrehzahl S steigt während des Abbremsvorgangs zumindest bereichsweise an. Es ist gemäß einem Ausführungsbeispiel vorgesehen, dass im ersten Zeitintervall T1, zwischen dem ersten Zeitpunkt t1, zu dem der Abbremsvorgang beginnt, und dem zweiten Zeitpunkt t2 eine Totzeit eingehalten wird. In der Totzeit findet beispielsweise keine Regelung der Solldrehzahl S statt. Im zweiten Zeitintervall T2 zwischen dem zweiten Zeitpunkt t2 und dem dritten Zeitpunkt t3 ist die Solldrehzahl S beispielsweise durch eine zweite Solldrehzahlrampe vorgegeben. Es ist jedoch ebenso vorgesehen, dass eine nichtlineare Funktion vorgegeben wird. Es ist lediglich wichtig, dass die Solldrehzahl zum dritten Zeitpunkt t3 höher ist als zum zweiten Zeitpunkt t2. Gemäß einem weiteren Ausführungsbeispiel ist im ersten Zeitintervall T1 die Solldrehzahl S durch eine erste Solldrehzahlrampe vorgegeben. Die Steigung dieser ersten Solldrehzahlrampe ist größer gleich Null. In dem in Fig. 2 dargestellten Ausführungsbeispiel ist sie zumindest näherungsweise identisch Null. Das erste Zeitintervall T1 ist also entweder eine Totzeit oder aber eine Haltezeit, in der der Drehzahlregler 18 eine zumindest näherungsweise konstante Solldrehzahl S des Rotors 4 vorgegeben bekommt. In diesem Zeitintervall T1 steigt der Rotorblattanstellwinkel P* mit hoher Geschwindigkeit an, da der Drehzahlregler 18 versucht, trotz des zunehmenden Winds der auftreffenden Windböe die Drehzahl des Rotors 4 konstant zu halten. Der Verlauf des Rotorblattanstellwinkels P, wie er bei konventionellen Systemen vorliegt, und der Verlauf des Rotorblattanstellwinkels P*, wie er bei dem System gemäß einem Ausführungsbeispiel auftritt, ist in dem ersten Zeitintervall T1 nahezu identisch.

In dem zweiten Zeitintervall T2 ist die Solldrehzahl S durch eine zweite Solldrehzahlrampe vorgegeben. Die zweite Steigung der zweiten Solldrehzahlrampe ist größer Null und unterscheidet sich von der Steigung der ersten Solldrehzahlrampe. Im dargestellten Ausführungsbeispiel ist die zweite Steigung der zweiten Solldrehzahlrampe erheblich größer als diejenige der ersten Solldrehzahlrampe. Der Rotorblattanstellwinkel P* weist im zweiten Zeitintervall T2 eine Steigung auf, die beispielsweise zumindest näherungsweise halb so groß ist wie die Steigung des Rotorblattanstellwinkels P* im ersten Zeitintervall T1. Als besonders vorteilhaft hat es sich erwiesen, wenn die Steigung im zweiten Zeitintervall T2 nur etwa ein Viertel der Steigung des Rotorblattanstellwinkels P* im ersten Zeitintervall T1 beträgt. Die Rotordrehzahl steigt in diesem Zeitraum über die Nenndrehzahl N an. Indem dem Drehzahlregler 18 steigende Solldrehzahlen S für die Rotordrehzahl vorgegeben werden, verringert sich die Pitchgeschwindigkeit, mit der die Rotorblätter 6 in Richtung der Fahnenstellung verfahren werden.

Es ist insbesondere vorgesehen, dass für die Verstellrate des Anstellwinkels während des zweiten Zeitintervalls T2 ein oberer Grenzwert und/oder ein unterer Grenzwert vorgegeben sind (nicht dargestellt.)

Ebenso sind Grenzwerte für die Solldrehzahlrampe vorgesehen. Die beiden Grenzwerte sind in Fig. 2 jeweils mit gepunkteter Linie dargestellt. Sie geben eine maximale bzw. eine minimale Steigung der zweiten Solldrehzahlrampe an. Sie weisen eine größere Steigung bzw. eine geringere Steigung als die in gestrichelter Linie dargestellte zweite Solldrehzahlrampe im zweiten Zeitintervall T2 auf. Ferner ist insbesondere vorgesehen, dass ein Maximalwert für die Rotordrehzahl R vorgegeben wird, dies gilt in dem in Fig. 2 dargestellten Ausführungsbeispiel beispielhaft für die auf den dritten Zeitpunkt t3 folgende Zeit. Hier verläuft die Solldrehzahl S horizontal. Steigt die Rotordrehzahl über diesen Wert an, greift das Pitchsystem erneut ein.

In dem Zeitraum, der sich an das zweite Zeitintervall T2 anschließt, also zeitlich nach dem dritten Zeitpunkt t3 liegt, ist die Steigung des Rotorblattanstellwinkels P* größer als im zweiten Zeitintervall T2. Sie ist jedoch kleiner als im ersten Zeitintervall T1.

Dargestellt ist in Fig. 2 eine Totzeit, die mit einer Eigenfrequenz der Tragstruktur 16 abgestimmt ist. Außerdem zeigt Fig. 2 eine Eigenfrequenz eines Triebstrangs der Windenergieanlage 2. Diese Schwingung ist in Fig. 2 als Oberwelle des Drehzahlsignals sichtbar. Die Triebstrangeigenfrequenz des Triebstrangs ist im dargestellten Ausführungsbeispiel, welches eine 3 MW Windenergieanlage 2, betrifft, deutlich größer als die Eigenfrequenz der Tragstruktur 16 einer solchen Anlage. Die Triebstrangeigenfrequenz ist etwa um einen Faktor 5 bis 10 größer (also schneller) als die Eigenfrequenz der Tragstruktur 16.

Es ist nun gemäß verschiedener Ausführungsbeispiele vorgesehen, dass die zeitliche Dauer der Totzeit eine Funktion der Eigenfrequenz der Tragstruktur und/oder eine Funktion der Triebstrangeigenfrequenz ist. Im letzteren Fall ist die Totzeit wesentlich kürzer als im ersten Fall. Im Vergleich zu dem dargestellten Ausführungsbeispiel verkürzt sich also insbesondere das Zeitintervall T1 erheblich. Wenn die Totzeit auf die Eigenfrequenz des Triebstrangs abgestimmt wird, können die dargestellten Drehzahlschwingungen ebenfalls gedämpft werden.

Das zuvor beschriebene Verfahren zum Steuern eines Anstellwinkels P der Rotorblätter 6 des Rotors 4 der Windenergieanlage 2 wird vom Steuerungssystem 16 der Windenergieanlage durchgeführt. Es führt im Vergleich zu herkömmlichen Verfahren zu wesentlich geringeren maximalen Biegemomenten M am Fuß der Tragstruktur 16 (Turmfußbiegemomente).

Fig. 3 zeigt in schematisch vereinfacht dargestellter Weise den zeitlichen Verlauf eines Biegemoments M am Turmfuß der Windenergieanlage 2 in einer Vergleichsdarstellung zwischen einem herkömmlichen Verfahren zum Abbremsen des Rotors 4 (durchgezogene Linie) und einem Verfahren gemäß Aspekten der Erfindung (strichpunktierte Linie). Ferner ist in Fig. 3 der zeitliche Verlauf des Rotorblattanstellwinkels P bei einem herkömmlichen Verfahren (durchgezogene Linie) und der Rotorblattanstellwinkel P* bei einem Verfahren gemäß Aspekten der Erfindung (strichpunktierte Linie) dargestellt.

Es sind ebenfalls die bereits zuvor erwähnten Zeitpunkte t1, t2 und t3 sowie das erste und zweite Zeitintervall T1 und T2 eingezeichnet. Die Steigung des Rotorblattanstellwinkels P, P* ist im ersten Zeitintervall T1 steil, vergleichbar einem herkömmlichen Verfahren. Im sich anschließenden zweiten Zeitintervall T2 ist der Anstieg des Rotorblattanstellwinkels P* jedoch deutlich flacher. Die Pitchgeschwindigkeit ist also geringer. Für den weiteren Verlauf des Bremsvorgangs gilt im Hinblick auf den Verlauf des Rotorblattanstellwinkels P* das bereits im Zusammenhang mit Fig. 2 Gesagte.

Eine zeitliche Dauer des ersten Zeitintervalls T1, in dem der Drehzahlregler 18 entweder eine Totzeit einhält oder aber eine zumindest näherungsweise konstante Solldrehzahl S des Rotors 4 vorgegeben bekommt, ist beispielsweise eine Funktion einer Eigenfrequenz der Tragstruktur 14 der Windenergieanlage 2. Die zeitliche Länge des Intervalls zwischen t1 und t2 ist also beispielsweise eine Funktion der Turmeigenfrequenz der Windenergieanlage 2. Im dargestellten Ausführungsbeispiel ist vorgesehen, dass das erste Zeitintervall T1 eine Dauer hat, die kleiner ist als ein Viertel der Dauer einer kompletten Schwingung der Tragstruktur 14 ist. Die Schwingung der Tragstruktur 14 lässt sich am zeitlichen Verlauf des Turmfußbiegemoments M ablesen. Ein Maximum bzw. Minimum des Turmfußbiegemoments M tritt bei maximaler Amplitude der Schwingung der Tragstruktur 14 auf. Bei dem dargestellten Abbremsvorgang des Rotors 4 der Windenergieanlage 2 nimmt der auf den Rotor 4 wirkende Schub zunächst durch die Drehzahlerhöhung sehr schnell zu, was zu einem dynamischen Einfedern des Turms führt. Bei der maximalen Turmauslenkung mit dem Wind tritt das erste Maximum des Turmfußbiegemoments M auf. Während die Tragstruktur mit dem Wind nach hinten schwingt, fällt der auf den Rotor 4 wirkende Schub sehr schnell ab, da die Rotorblätter 6 aus dem Wind gedreht werden. Die Folge ist, dass anschließend der Kopf (das Maschinenhaus, die Gondel) der Windenergieanlage 2 um so stärker nach vorn, also gegen den Wind schwingt. Im vorderen Endpunkt dieser Schwingung tritt das in der Figur sichtbare ausgeprägte Minimum des Turmfußbiegemoments M auf, welches betragsmäßig das maximale Turmfußbiegemoment ist. Die Dauer der ersten Schwingungsperiode der Tragstruktur 14 mit dem Wind entspricht in etwa der zeitlichen Dauer der Totzeit, also der zeitlichen Länge des ersten Zeitintervalls T1. Diese Zeitspanne entspricht in etwa einem Viertel der gesamten Turmschwingungsperiode. Nachdem die Totzeit verstrichen ist, der Turm also maximal mit dem Wind ausgelenkt ist, übernimmt der Drehzahlregler wieder die Steuerung des Rotorblattanstellwinkels P*. Die Rotorblätter werden ab diesem Moment mit geringerer Geschwindigkeit aus dem Wind gefahren, um den Turmschub nicht noch weiter zu reduzieren und somit die Schwinggeschwindigkeit der Tragstruktur gegen den Wind nicht noch stärker anzufachen. Die Pitchgeschwindigkeit wird, sofern die Rotordrehzahl nicht den maximal zulässigen Wert überschreitet, geringer ausfallen als während der vorausgegangenen Totzeit, so dass eine ausgeprägte Gegenschwingung (in Windrichtung)verringert wird. Die Wirksamkeit des beschriebenen Vorgehens ist an dem deutlich reduzierten absoluten Minimum (und somit betragsmäßig maximalen Turmfußbiegemoments) ersichtlich.

Wie anhand eines Vergleichs zwischen den Kurven der Turmfußbiegemomente M für ein herkömmliches Verfahren (durchgezogene Linie) und dem Verfahren gemäß Aspekten der Erfindung (strichpunktierte Linie) hervorgeht, sind die Spitzenbelastungen am Turmfuß deutlich verringert. Insbesondere fällt die Spitzenbelastung im zweiten Zeitintervall T2, wenn die Tragstruktur 14 nach Einleiten des Bremsvorgangs aufgrund ihrer Elastizität in ihre vordere Extremposition schwingt und gleichzeitig praktisch kein Schub auf den Rotor 4 wirkt, deutlich geringer aus.

Die Differenz zwischen dem bei einem herkömmlichen Verfahren auftretenden maximalen Turmfußbiegemoments einerseits und dem andererseits bei einem Verfahren gemäß Aspekten der Erfindung auftretenden maximalen Turmfußbiegemoment, ist in Fig. 3 mit ΔM bezeichnet.

Vorteilhaft verringert das Verfahren zum Abbremsen eines Rotors 4 einer Windenergieanlage 2 bzw. das Steuerungssystem 16 zum Steuern eines Anstellwinkels eines Rotorblatts 6 während des Abbremsvorgangs die maximalen während des Abbremsvorgangs auftretenden Turmfußbiegemomente M, so dass die Tragstruktur 14 schwächer und somit kostengünstiger dimensioniert werden kann.

Im Rahmen der Erfindung sind Merkmale, die mit "insbesondere" oder "vorzugsweise" gekennzeichnet sind, als fakultative Merkmale zu verstehen.

### Bezugszeichenliste

- 2: Windenergieanlage
- 4: Rotor
- 6: Rotorblatt
- 8: Rotorblattwurzel
- 10: Rotorblattspitze
- 12: Rotornabe
- 14: Tragstruktur
- 16: Steuerungssystem
- 18: Drehzahlregler

- R: Rotordrehzahl
- t: Zeit
- P, P*: Rotorblattanstellwinkel
- T1: erstes Zeitintervall
- T2: zweites Zeitintervall
- t1 ...t3: erster ... dritter Zeitpunkt
- N: Nenndrehzahl
- S: Solldrehzahl
- M: Turmfußbiegemoment

## Patentansprüche

1. Verfahren zum Steuern eines Anstellwinkels eines Rotorblatts (6) während eines Abbremsvorgangs eines das Rotorblatt (6) umfassenden Rotors (4) einer Windenergieanlage (2), wobei während des Abbremsvorgangs eine zeitabhängige Solldrehzahl (S) als Führungsgröße eines Drehzahlreglers (18) der Windenergieanlage (2) vorgegeben wird, wobei eine Drehzahl des Rotors (4) der Windenergieanlage (2) von dem Drehzahlregler (18) geregelt wird, der zum Regeln der Drehzahl den Anstellwinkel des Rotorblatts (6) verändert, **dadurch gekennzeichnet, dass** die Solldrehzahl (S) während des Abbremsvorgangs, dessen Ziel eine Verringerung der Rotordrehzahl ist, zumindest bereichsweise ansteigt.

2. Verfahren nach Anspruch 1, **dadurch gekennzeichnet, dass** nach Einhalten einer vorgebbaren Totzeit die Solldrehzahl (S) während des Abbremsvorgangs zumindest bereichsweise ansteigt.

3. Verfahren nach Anspruch 1, **dadurch gekennzeichnet, dass** der Abbremsvorgang in einem Zeitintervall stattfindet, welches ein erstes Zeitintervall (T1) und ein späteres zweites Zeitintervall (T2) umfasst, wobei im ersten Zeitintervall (T1) zwischen einem ersten Zeitpunkt (t1), zu dem der Abbremsvorgang beginnt, und einem zweiten späteren Zeitpunkt (t2) die Solldrehzahl (S) durch eine erste Solldrehzahlrampe vorgegeben wird, und in dem zweiten Zeitintervall (T2) zwischen dem zweiten Zeitpunkt (t2) und einem späteren dritten Zeitpunkt (t3) die Solldrehzahl (S) durch eine zweite Solldrehzahlrampe vorgegeben wird, und wobei die erste Solldrehzahlrampe und die zweite Solldrehzahlrampe unterschiedliche Steigungen aufweisen.

4. Verfahren nach Anspruch 2 oder 3, **dadurch gekennzeichnet, dass** eine zeitliche Dauer der Totzeit und/oder des ersten Zeitintervalls (T1) eine Funktion einer Eigenfrequenz einer Tragstruktur (14) und/oder einer Eigenfrequenz eines Triebstrangs der Windenergieanlage (2) ist.

5. Verfahren nach Anspruch 3 oder 4, **dadurch gekennzeichnet, dass** eine zweite Steigung der zweiten Solldrehzahlrampe größer Null ist.

6. Verfahren nach einem der Ansprüche 3 bis 5, **dadurch gekennzeichnet, dass** eine erste Steigung der ersten Solldrehzahlrampe größer gleich Null ist.

7. Verfahren nach einem der Ansprüche 3 bis 6, **dadurch gekennzeichnet, dass** eine erste Steigung der ersten Solldrehzahlrampe kleiner ist als eine zweite Steigung der zweiten Solldrehzahlrampe.

8. Verfahren zum Betreiben einer Windenergieanlage (2), bei dem eine extreme Betriebssituation der Windenergieanlage (2) festgestellt wird, **dadurch gekennzeichnet, dass** bei Auftreten der extremen Betriebssituation ein Abbremsvorgang eines Rotors (4) der Windenergieanlage (2) eingeleitet wird und der Rotor (4) mit einem Verfahren gemäß einem der Ansprüche 1 bis 7 abgebremst wird.

9. Steuerungssystem (16) zum Steuern eines Anstellwinkels eines Rotorblatts (6) während eines Abbremsvorgangs eines das Rotorblatt (6) umfassenden Rotors (4) einer Windenergieanlage (2), wobei das Steuerungssystem (16) dazu eingerichtet ist, während des Abbremsvorgangs eine zeitabhängige Solldrehzahl (S) als Führungsgröße eines Drehzahlreglers (18) der Windenergieanlage (2) vorzugeben, wobei der Drehzahlregler (18) dazu eingerichtet ist, eine Drehzahl des Rotors (4) der Windenergieanlage (2) zu regeln und zum Regeln der Drehzahl den Anstellwinkel des Rotorblatts (6) zu verändern, **dadurch gekennzeichnet, dass** das Steuerungssystem (16) dazu eingerichtet ist, während des Abbremsvorgangs, dessen Ziel eine Verringerung der Rotordrehzahl ist, eine zeitabhängige Solldrehzahl (S) als Führungsgröße vorzugeben, welche zumindest bereichsweise ansteigt.

10. Steuerungssystem (16) nach Anspruch 9, **dadurch gekennzeichnet, dass** das Steuerungssystem (16) ferner dazu eingerichtet ist, während des Abbremsvorgangs zunächst eine vorgebbare Totzeit einzuhalten und anschließend eine zeitabhängige Solldrehzahl (S) als Führungsgröße vorzugeben, welche zumindest bereichsweise ansteigt.

11. Steuerungssystem (16) nach Anspruch 9, **dadurch gekennzeichnet, dass** der Abbremsvorgang in einem Zeitintervall stattfindet, welches ein erstes Zeitintervall (T1) und ein zweites Zeitintervall (T2) umfasst, wobei das Steuerungssystem (16) dazu eingerichtet ist, im ersten Zeitintervall (T1) zwischen einem ersten Zeitpunkt (t1), zu dem der Abbremsvorgang beginnt, und einem zweiten Zeitpunkt (t2) die Solldrehzahl (S) durch eine erste Solldrehzahlrampe vorzugeben, und in einem zweiten Zeitintervall (T2) zwischen dem zweiten Zeitpunkt (t2) und einem dritten Zeitpunkt (t3) die Solldrehzahl (S) durch eine zweite Solldrehzahlrampe vorzugeben, und wobei die erste Solldrehzahlrampe und die zweite Solldrehzahlrampe unterschiedliche Steigungen aufweisen.

12. Steuerungssystem nach Anspruch 10 oder 11, **dadurch gekennzeichnet, dass** in dem Steuerungssystem (16) ein Wert für eine Eigenfrequenz einer Tragstruktur der Windenergieanlage (2) vorhanden ist und das Steuerungssystem (16) dazu eingerichtet ist, eine zeitliche Dauer der Totzeit und/oder des ersten Zeitintervalls (T1) als eine Funktion der Eigenfrequenz der Tragstruktur und/oder einer Eigenfrequenz eines Triebstrangs der Windenergieanlage (2) vorzugeben.

13. Windenergieanlage (2), **gekennzeichnet durch** ein Steuerungssystem (16) nach einem der Ansprüche 9 bis 12, wobei das Steuerungssystem (16) ferner dazu eingerichtet ist, eine extreme Betriebssituation der Windenergieanlage (2) festzustellen und bei Auftreten der extremen Betriebssituation ein Abbremsvorgang des Rotors (4) der Windenergieanlage (2) einzuleiten.

## Claims

1. A method of controlling an angle of attack of a rotor blade (6) during a braking process of a rotor (4) of a wind energy installation (2), the rotor (4) comprising the rotor blade (6), wherein, during the braking process, a time-dependent target rotational speed (S) is specified as a reference variable of a rotational speed controller (18) of the wind energy installation (2), wherein a rotational speed of the rotor (4) of the wind energy installation (2) is controlled by the rotational speed controller (18), which, in order to control the rotational speed, changes the angle of attack of the rotor blade (6), **characterised in that**, during the braking process, the purpose of which is a reduction in the rotational speed of the rotor, the target rotational speed (S) increases at least during some parts of the braking process.

2. The method according to claim 1, **characterised in that**, after a dead time has been observed, which dead time is able to be specified, the target rotational speed (S) increases at least during some parts of the braking process.

3. The method according to claim 1, **characterised in that** the braking process takes place in a time interval which comprises a first time interval (T1) and a later, second time interval (T2), wherein, in the first time interval (T1), between a first point in time (t1), at which the braking process begins, and a second, later point in time (t2), the target rotational speed (S) is specified by a first target rotational speed ramp, and in the second time interval (T2), between the second point in time (t2) and a later, third point in time (t3), the target rotational speed (S) is specified by a second target rotational speed ramp, and wherein the first target rotational speed ramp and the second target rotational speed ramp have different gradients.

4. The method according to claim 2 or 3, **characterised in that** a time duration of the dead time and / or of the first time interval (T1) is a function of a natural frequency of a support structure (14) and / or of a natural frequency of a drive train of the wind energy installation (2).

5. The method according to claim 3 or 4, **characterised in that** a second gradient of the second target rotational speed ramp is greater than zero.

6. The method according to any one of the claims 3 to 5, **characterised in that** a first gradient of the first target rotational speed ramp is greater than or equal to zero.

7. The method according to any one of the claims 3 to 6, **characterised in that** a first gradient of the first target rotational speed ramp is smaller than a second gradient of the second target rotational speed ramp.

8. A method of operating a wind energy installation (2), in which an extreme operating situation of the wind energy installation (2) is detected, **characterised in that**, when the extreme operating situation occurs, a braking process of a rotor (4) of the wind energy installation (2) is initiated and braking of the rotor (4) is carried out using a method according to any one of the claims 1 to 7.

9. A control system (16) for controlling an angle of attack of a rotor blade (6) during a braking process of a rotor (4) of a wind energy installation (2), the rotor (4) comprising the rotor blade (6), wherein the control system (16) is arranged to specify a time-dependent target rotational speed (S) as a reference variable of a rotational speed controller (18) of the wind energy installation (2) during the braking process, wherein the rotational speed controller (18) is arranged to control a rotational speed of the rotor (4) of the wind energy installation (2) and to change the angle of attack of the rotor blade (6) in order to control the rotational speed, **characterised in that** the control system (16) is arranged to specify a time-dependent target rotational speed (S) as a reference variable during the braking process, the purpose of which is a reduction in the rotational speed of the rotor, which target rotational speed (S) increases at least during some parts of the braking process.

10. The control system (16) according to claim 9, **characterised in that** the control system (16) is further arranged, during the braking process, initially to observe a dead time, which dead time is able to be specified, and then to specify a time-dependent target rotational speed (S) as a reference variable, which target rotational speed (S) increases at least during some parts of the braking process.

11. The control system (16) according to claim 9, **characterised in that** the braking process takes place in a time interval which comprises a first time interval (T1) and a second time interval (T2), wherein the control system (16) is arranged in such a way that, in the first time interval (T1), between a first point in time (t1), at which the braking process begins, and a second point in time (t2), it specifies the target rotational speed (S) by a first target rotational speed ramp, and in such a way that, in a second time interval (T2), between the second point in time (t2) and a third point in time (t3), it specifies the target rotational speed (S) by a second target rotational speed ramp, and wherein the first target rotational speed ramp and the second target rotational speed ramp have different gradients.

12. The control system according to claim 10 or 11, **characterised in that** a value for a natural frequency of a support structure of the wind energy installation (2) is present in the control system (16), and the control system (16) is arranged to specify a time duration of the dead time and / or of the first time interval (T1) as a function of the natural frequency of the support structure and / or of a natural frequency of a drive train of the wind energy installation (2).

13. A wind energy installation (2), **characterised by** a control system (16) according to any one of the claims 9 to 12, wherein the control system (16) is further arranged to detect an extreme operating situation of the wind energy installation (2) and to initiate a braking process of the rotor (4) of the wind energy installation (2) when the extreme operating situation occurs.

## Revendications

1. Procédé de commande d'un angle d'attaque d'une pale de rotor (6) au cours d'une opération de freinage d'un rotor (4), comprenant la pale de rotor (6), d'une éolienne (2), dans lequel une vitesse de rotation de consigne (S) en fonction du temps est spécifiée en tant que grandeur de référence d'un régulateur de vitesse de rotation (18) de l'éolienne (2) au cours de l'opération de freinage, dans lequel une vitesse de rotation du rotor (4) de l'éolienne (2) est régulée par le régulateur de vitesse de rotation (18), qui modifie, pour réguler la vitesse de rotation, l'angle d'attaque de la pale de rotor (6), **caractérisé en ce que** la vitesse de rotation de consigne (S) augmente au moins par endroits au cours de l'opération de freinage, dont l'objectif est de réduire la vitesse de rotation de rotor.

2. Procédé selon la revendication 1, **caractérisé en ce qu'**après avoir respecté un temps mort pouvant être spécifié, la vitesse de rotation de consigne (S) augmente au moins par endroits au cours de l'opération de freinage.

3. Procédé selon la revendication 1, **caractérisé en ce que** l'opération de freinage a lieu dans un laps de temps qui comprend un premier laps de temps (T1) et un deuxième laps de temps (T2) ultérieur, dans lequel dans le premier laps de temps (T1) entre un premier moment (t1), auquel l'opération de freinage débute, et un deuxième moment (t2) ultérieur, la vitesse de rotation de consigne (S) est spécifiée par une première rampe de vitesse de rotation de consigne, et dans le deuxième laps de temps (T2) entre le deuxième moment (t2) et un troisième moment (t3) ultérieur, la vitesse de rotation de consigne (S) est spécifiée par une deuxième rampe de vitesse de rotation de consigne, et dans lequel la première rampe de vitesse de rotation de consigne et la deuxième rampe de vitesse de rotation de consigne présentent des pentes différentes.

4. Procédé selon la revendication 2 ou 3, **caractérisé en ce qu'**une durée du temps mort et/ou du premier laps de temps (T1) est une fonction d'une fréquence propre d'une structure porteuse (14) et/ou d'une fréquence propre d'un train d'entraînement de l'éolienne (2).

5. Procédé selon la revendication 3 ou 4, **caractérisé en ce qu'**une deuxième pente de la deuxième rampe de vitesse de rotation de consigne est supérieure à zéro.

6. Procédé selon l'une quelconque des revendications 3 à 5, **caractérisé en ce qu'**une première pente de la première rampe de vitesse de rotation de consigne est supérieure ou égale à zéro.

7. Procédé selon l'une quelconque des revendications 3 à 6, **caractérisé en ce qu'**une première pente de la première rampe de vitesse de rotation de consigne est inférieure à une deuxième pente de la deuxième rampe de vitesse de rotation de consigne.

8. Procédé permettant de faire fonctionner une éolienne (2), où une situation de fonctionnement extrême de l'éolienne (2) est relevée, **caractérisé en ce que** lors de l'apparition de la situation de fonctionnement extrême, une opération de freinage d'un rotor (4) de l'éolienne (2) est initiée et le rotor (4) est freiné avec un procédé selon l'une quelconque des revendications 1 à 7.

9. Système de commande (16) pour commander un angle d'attaque d'une pale de rotor (6) au cours d'une opération de freinage d'un rotor (4), comprenant la pale de rotor (6), d'une éolienne (2), dans lequel le système de commande (16) est mis au point pour spécifier une vitesse de rotation de consigne (S) en fonction du temps en tant que grandeur de référence d'un régulateur de vitesse de rotation (18) de l'éolienne (2) au cours de l'opération de freinage, dans lequel le régulateur de vitesse de rotation (18) est mis au point pour réguler une vitesse de rotation du rotor (4) de l'éolienne (2) et pour modifier l'angle d'attaque de la pale de rotor (6) pour réguler la vitesse de rotation, **caractérisé en ce que** le système de commande (16) est mis au point pour spécifier une vitesse de rotation de consigne (S) en fonction du temps en tant que grandeur de référence, laquelle augmente au moins par endroits, au cours de l'opération de freinage, dont l'objectif est de réduire la vitesse de rotation de rotor.

10. Système de commande (16) selon la revendication 9, **caractérisé en ce que** le système de commande (16) est mis au point en outre pour respecter en premier lieu un temps mort pouvant être spécifié au cours de l'opération de freinage puis pour spécifier une vitesse de rotation de consigne (S) en fonction du temps en tant que grandeur de référence, laquelle augmente au moins par endroits.

11. Système de commande (16) selon la revendication 9, **caractérisé en ce que** l'opération de freinage a lieu dans un laps de temps, lequel comprend un premier laps de temps (T1) et un deuxième laps de temps (T2), dans lequel le système de commande (16) est mis au point pour spécifier la vitesse de rotation de consigne (S) par une première rampe de vitesse de consigne dans le premier laps de temps (T1) entre un premier moment (t1), auquel l'opération de freinage débute, et un deuxième moment (t2), et pour spécifier la vitesse de rotation de consigne (S) par une deuxième rampe de vitesse de rotation de consigne dans un deuxième laps de temps (T2) entre le deuxième moment (t2) et un troisième moment (t3), et dans lequel la première rampe de vitesse de rotation de consigne et la deuxième rampe de vitesse de rotation de consigne présentent des pentes différentes.

12. Système de commande selon la revendication 10 ou 11, **caractérisé en ce qu'**une valeur pour la fréquence propre d'une structure porteuse de l'éolienne (2) est présente dans le système de commande (16), et le système de commande (16) est mis au point pour spécifier une durée du temps mort et/ou du premier laps de temps (T1) en tant qu'une fonction de la fréquence propre de la structure porteuse et/ou d'une fréquence propre d'un train d'entraînement de l'éolienne (2).

13. Eolienne (2), **caractérisée par** un système de commande (16) selon l'une quelconque des revendications 9 à 12, dans laquelle le système de commande (16) est mis au point en outre pour relever une situation de fonctionnement extrême de l'éolienne (2) et pour initier, lors de l'apparition de la situation de fonctionnement extrême, une opération de freinage du rotor (4) de l'éolienne (2).
